# EUROPEAN PATENT SPECIFICATION

(11) **EP 2 600 989 B1**
(45) Date of publication and mention of the grant of the patent: **08.10.2014**
(21) Application number: 11744093.3
(22) Date of filing: 11.07.2011
(51) Int. Cl.: B08B 15/02, B08B 15/00, C21C 5/52, F27D 17/00, F24F 7/02, F24F 7/04

(54) **BUILDING PROVIDED WITH A HOOD FOR DRAWING FUMES PRODUCED IN METALLURGICAL ENVIRONMENT**
GEBÄUDE MIT EINER ABZUGSHAUBE FÜR DEN ABZUG VON IN EINER METALLURGISCHEN UMGEBUNG ERZEUGTEN DÄMPFEN
BÂTIMENT POURVU D'UNE HOTTE DESTINÉE À ASPIRER LES FUMÉES PRODUITES DANS UN ENVIRONNEMENT MÉTALLURGIQUE

(30) Priority: 03.08.2010 IT MI20101478
(43) Date of publication of application: 12.06.2013
(73) Proprietor: SMS Concast Italia S.p.A., 33100 Udine (IT)
(72) Inventor: MIANI, Stefano, I-33040 Premariacco (UD) (IT); MANAZZONE, Michele, I-33040 Pradamano (UD) (IT); CUDICIO, Marco, Peter, I-31015 Conegliano (TV) (IT)
(74) Representative: Fiorentino, Luca
(86) International application number: PCT/IB2011/053084
(87) International publication number: WO 2012/017341

(56) References cited:
- DE-A1- 1 604 293
- DE-A1- 2 601 264
- DE-U1-202006 003 723
- US-A- 3 746 626
- US-A- 4 109 433
- US-A- 4 360 404

## Description

It is an object of the present invention a hood for drawing fumes produced in an environment in which metal processings are performed, for example, an environment receiving a metallurgical furnace, such as an arc furnace. It is a further object of the present invention a building provided with such hood.

Known hoods comprise a converging conduit in which are conveyed the fumes. From the converging conduit, the fumes are conveyed in dedicated pipes for discharging them in the outer environment, before that the fumes flow in suitable processing stations, for example through dust abatement filters. In their initial portions, the pipes are located above the hood converging conduit and are coaxially with it.

Generally, the pipes extend outside the building, suspended on the roof of the latter by a supporting structure.

However, the buildings provided with fume drawing systems having such arrangement have some drawbacks.

First, the pipes are exposed to the outer environment and to winds and are as well rather susceptible to seismic events. Therefore, they require a supporting structure adapted to support them in every environmental and weather conditions, for example with high winds or heavy rains, or with snow or seismic events. Therefore, such a supporting structure is subjected to both high static and dynamic loads, and should be dimensioned accordingly.

Moreover, the extension of the pipes on the roof of the building binds the possibility to conform the pipes themselves according to arrangements optimizing the fume fluid dynamics inside them, in other words such to reduce the flow resistances. This causes high power consumptions by the fans thrusting the fumes in the pipes.

Lastly, the outer pipes have a substantial visual impact, which is not always acceptable.

A building according to the preamble of claim 1 is disclosed in the document US 3,746,626.

A fume collecting hood comprising a converging conduit between an inlet and an outlet where the exhaust pipes comprise a wall which is formed by portions of the converging part of the hood and where the pipes extend laterally from a header chamber is disclosed in the document DE 16 04 293 A1.

Therefore, the object of the present invention is to provide a hood for drawing fumes in a metallurgical environment such to overcome, at least partially, the problems of the cited prior art.

This and other objects are obtained by a building provided with a hood according to claim 1.

In order to better understand and appreciate the advantages, in the following, some of its exemplifying non limiting embodiments will be described with reference to the attached drawings, wherein:
Figure 1 is a partially transparent schematic perspective view of a building provided with a hood according to the invention in a partially disassembled condition;
Figure 2 is a perspective schematic view of the building of Figure 1 in a partially assembled condition according to a possible embodiment of the invention;
Figure 3 is a perspective schematic view of the building of Figure 1 in a partially assembled condition according to a further possible embodiment of the invention;
Figure 4 is a partially transparent schematic view of the building of Figure 3;
Figure 5 is a partially transparent perspective schematic view of a detail of a building provided with a hood according to a further embodiment of the invention;
Figure 6 is a partially transparent schematic perspective view of the detail of Figure 5 according to a further possible embodiment of the invention;
Figure 7 is a partially transparent perspective schematic view, of the building of Figure 1 in a partially assembled condition according to a further embodiment of the invention.

With reference to the figures, a building adapted to receive a metallurgical environment, that is an environment in which are performed metal processings, is shown at 1. For example, the inside of building 1 can receive a metallurgical furnace 2, such as an arc furnace.

It is to be observed that in the attached figures, building 1 has been schematically shown. Specifically, a possible supporting structure provided with supporting pillars 3 has been shown. In order to simplify the description, further elements of the building, such as walls, windows, etcetera, have not been expressly shown.

In the spaces inside the building 1, the operations performed in them, specifically the casting operations of the furnace 2, produce fumes which require to be taken outside the building itself and, preferably, processed, for example by suitable filters, before being expelled in the outer environment.

In order to make possible the drawing and expulsion of the fumes from the inside of the building 1, the latter comprises a drawing hood 4. The fume drawing in the hood is preferably aided by fans (not shown in the figures).

Hood 4 comprises a main hood body 5 having a shape suitable for the fume draft. Particularly, the hood main body 5 delimits a conduit having an inlet opening 6 receiving the fumes coming from the metallurgical environment (located below the main hood body 5 in the normal conditions of use), and an outlet opening 7, through which the fumes exit the main hood body 5. Between the inlet opening 6 and the outlet opening 7, the hood main body 5 has the arrangement of a converging conduit.

Preferably, the inlet opening 6 and the outlet opening 7 having a length smaller than the one of the inlet opening 6, are one over the other. Still more preferably, such inlet 6 and outlet 7 openings are aligned with respect to the furnace 2, so that to receive the fumes coming from it without causing the fumes to be subjected to substantial path changes.

Advantageously, the main hood body 5 besides the above-mentioned function of drawing and conveying the fumes, has also the function of covering the building. In other words, it acts also as a roof for the building 1, at least in the portion in which are performed the metallurgical processings causing the fume generation.

The hood 4 comprises a header 8 adapted to collect the fumes coming from the hood main body 5 conduit. The header 7 comprises a header chamber 9 in which the fumes flow when they exit the outlet opening 7 of the main hood body 5, then they are delivered to pipes 17 conveying them outside the building. Preferably, the header 8 is coaxially arranged with respect to the hood main body 5 and, still more preferably, the header chamber 9 has an outline following the outline of the outlet opening 7 of the main hood body 5. For example, the header chamber 9 and the outlet opening 7 have a square or rectangular shape.

According to an embodiment, the outlet opening 7 of the main hood body 5 coincides with the inlet opening of the header chamber 9.

Advantageously, at the header 8 inlet opening there are one or more flow deflectors 10 adapted to convey the fumes from the main hood body 5 along desired paths. The flow deflectors 10 can be fixed or adjustable. For example, they can comprise shaped bars.

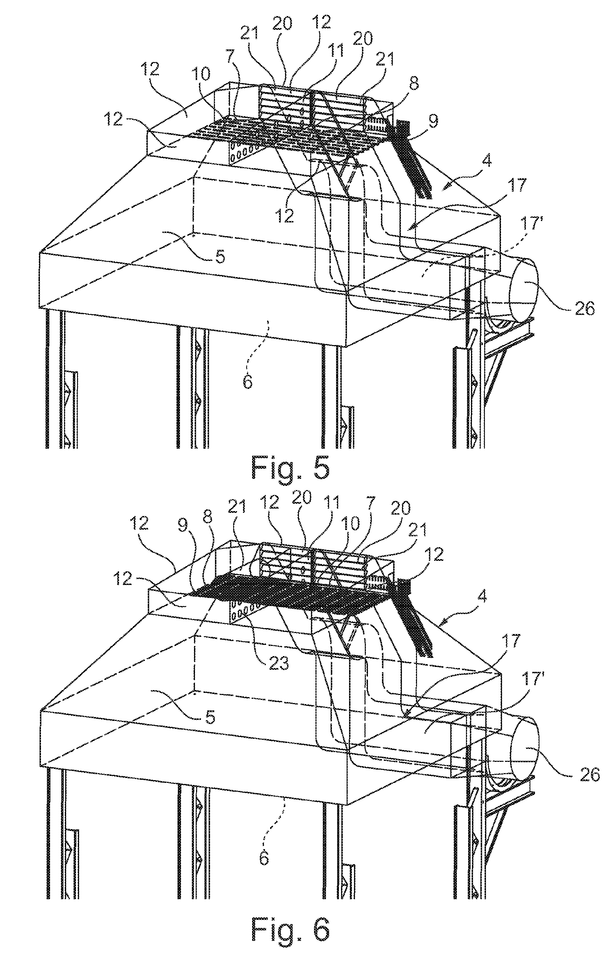

The header 8 can comprise partitions 11 for partitioning the header chamber 9 itself in sectors. The partitions 11, made for example of sheet, can comprise holes or slots 23 for the partial flow of the fumes from a sector to another (for example see Figure 6). Alternatively, they can be devoid of such holes or slots. Moreover, the partitions 11 can take different arrangements as a function of the path which the fumes are set to follow in the header collector. With reference to the embodiments shown in the figures, the partitions 11 can be for example shaped as plate-like panels.

As said, the header chamber 9 is downwardly delimited by its inlet opening, which, preferably, coincides with the outlet opening 6 of the main hood body 5. Preferably, the header chamber 9 is laterally delimited by side closing panels 12, for example made of sheet. The side closing panels 12 can comprise openings for discharging the fumes in the pipes 17.

Advantageously, the header chamber 9 is closed at its top, that is on the side opposite to the outlet opening 7 of the main hood body 5 conduit.

The modes for closing the header chamber 9 can be different.

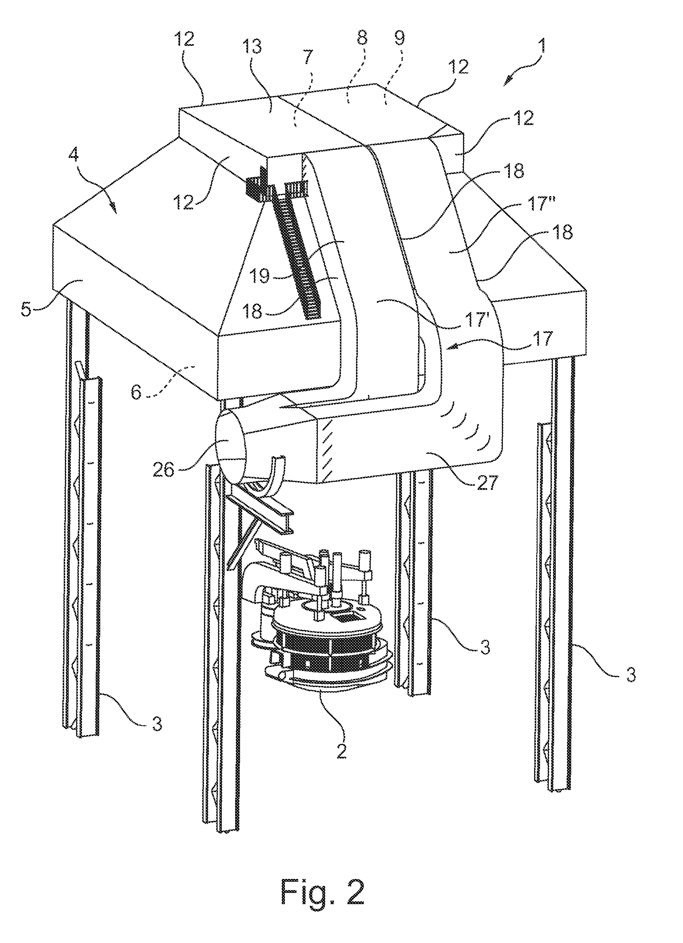

According to an embodiment (Figure 2), the header chamber 9 is closed at its top by a closing panel 13, for example made of sheet, which can be connected to the side panels 12 or can be made integral with the latter.

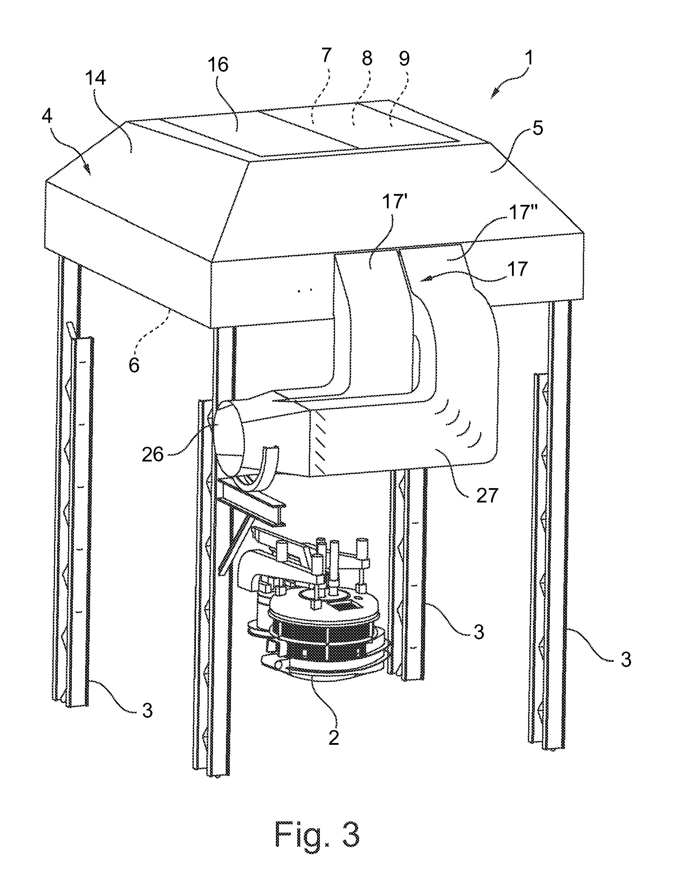

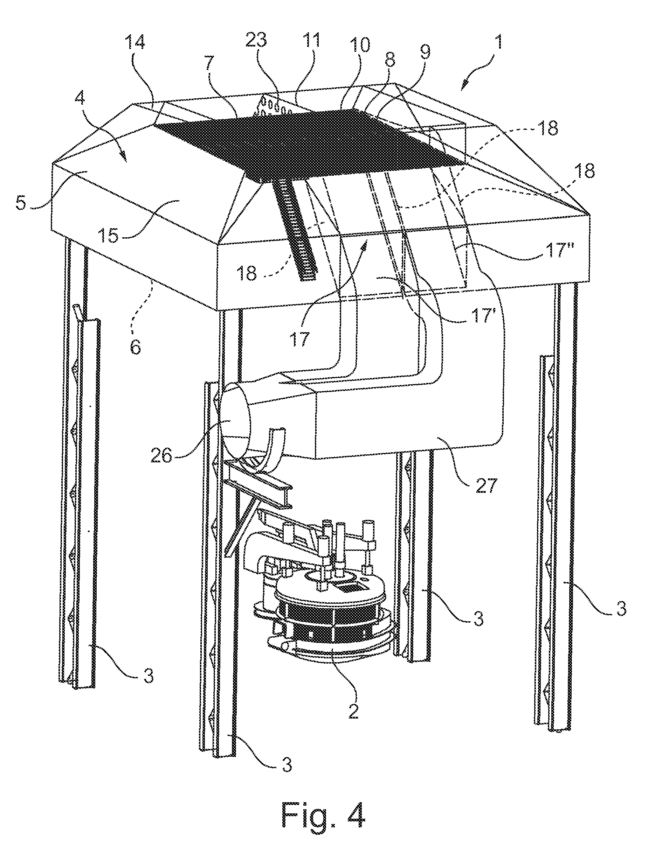

Alternatively, according to a further possible embodiment (Figures 3 and 4), the hood 4 comprises an auxiliary cover 14 overlapped to the hood main body 5 in order to form a gap 15 with the latter. Such gap 15 substantially forms a garret, because, as said, the hood main body 5 forms a cover of the building 1. Advantageously, according to this embodiment, a portion of the auxiliary cover 14, preferably a central portion 16, closes at the top the header chamber 9.

It is to be observed that in the present specification and in the attached claims, the terms "lower side", "at the bottom" or analogous terms, referred to the hood 1 or to its components, mean a side of these facing the inside of the building, in other words facing the fume producing source, such as the metallurgical furnace. Instead, the terms "upper side", "at the top", or analogous terms mean the sides of the hood or of its components facing the side opposite to the lower side.

As said before, the hood 4 comprises one or more pipes 17 adapted to withdraw the fumes from the header 9 and adapted to convey them outside the building 1. For example, the pipes 17 can be connected to further pipes for conveying the fumes to suitable filters, in which are held the dusts before releasing the fumes in the outer environment.

Advantageously, the portions of the hood main body 5 form the wall of the pipes 17.

In other words, the pipes 17 are not separately manufactured bodies and afterwards connected to the hood, but they are integrated with it. The main hood body 5 has its own walls which are partially in common with the pipes.

Particularly, the main hood body 5 walls preferably defining the converging hood conduit through which the fumes are conveyed in the header 9 are at least partially in common with the pipes 17. Such portions of the main hood body 5 cooperate therefore with the flow of the fumes in the pipes 17. For example, the main hood body 5 can be formed by a sheet (so that to delimit the above-mentioned hood conduit) shaped as a single wall. Portions of such a sheet are common to the hood conduit and pipes 17.

According to a further embodiment not shown in the figures, the main hood body 5 can comprise a structure having one or more walls (that is formed by more overlapped layers), for example a double walls walled structure or with three or more overlapped walls. According to this arrangement, first walls of the more walls walled structure define the hood conduit while second walls (or their portions) of the more walls walled structure form the walls of pipes 17. Therefore, the walls of the more walls walled structure delimiting the hood conduit are not the same walls of the more walls walled structure forming the walls of pipes 17.

For example, when the main hood body 5 is formed by a double walls walled structure, the innermost walls of the double walls walled structure delimit the hood conduit, while the outermost walls of the double walls walled structure, or their portions, form the walls of pipes 17.

Preferably, the pipes 17 extend on the upper side of the main hood body 5. In other words, the above-mentioned portions of the main hood body 5 form the lower walls of pipes 17, which are therefore closed at the bottom by the main hood body 5.

The pipes 17 are preferably laterally closed by two side closing panels 18, for example, made of sheet, which can be fixed to the main hood body 5. Alternatively, the side closing panels 18 can be made integral with the latter. According to a further embodiment, the two side closing panels 18 are shaped in order to close the pipes 17 at the top during the assembly conditions. For example, they can be in the form of an inverted L or of an halfarch.

At the top, the pipes 17 can be closed by a closing upper panel 19, which is also preferably made of sheet, opposed to the lower walls formed by the main hood body 5 (for example see Figure 2). The closing upper panel 19 can be fixed to the side closing panels 18 or it can be made integral with them. Preferably, the closing side and upper panels 18 and 19, as well as the portions of the main hood body 5, forming the lower walls of pipes 17, are shaped so that the cross-sections of the pipes 17 are rectangular or square.

According to this arrangement, the pipes 17 are located outside the building and directly on the upper side of the main hood body 5, and therefore they are not banked or supported by a supporting structure as it occurs with the hoods of the prior art.

According to an alternative embodiment (Figures 3 and 4), the pipes 17 are closed at the top by the above described auxiliary cover 14. According to this embodiment, the pipes 17 are located in the gap 15 formed by the auxiliary cover 14 and the main hood body 5 and are delimited by the latter respectively on the upper and lower sides. Laterally, the pipes 17 are preferably closed in a way analogous to the above described one, that is by the side closing panels 18, for example having a shape plate.

According to this arrangement, the pipes 17 are out-of-sight, as well as the header chamber 9. Therefore, they are protected from the outer environment. Also in this case, the pipes 17 have preferably a square or rectangular cross-section.

It is to be observed that, during the normal conditions of use, the pipes 17 are vacuum-operated. Therefore, the main hood body 5 (at least locally, in other words in its portions forming the walls for pipes 17), the side closing panels 18, the upper closing panel 19, or the auxiliary cover 14 (at least locally, in other words in its portions forming the walls for pipes 17) are made of materials adapted to withstand such load conditions. Moreover, they must be capable of resisting the aggression of dusts and chemicals contained in the fumes.

The side and upper closing panels 18 and 19 (if they are provided) can, to this end, have a Greek fret design, or similar, or of the sandwichtype. They can be made of materials such as steel, preferably, having protective coatings, or steels resistant to the fume high temperatures and to the corrosion (Corten steel for example), or aluminum, or light alloys.

According to a possible embodiment, pipes 17 are internally provided with means (not shown in the figures) adapted to at least partially hold the dusts. For this reason, during the use, a protective film forms in the pipes 17 due to the dust deposition, protecting the pipe themselves from wear. For example, hooks are provided on the side or upper closing panels 18 or 19 or also on the portions of the hood main body 5 and/or of the auxiliary cover 14, which form the upper and lower walls of pipes 17, respectively.

The pipes 17 comprise fume inlet openings 20 from the header chamber 9 to the pipes 17 themselves. Such openings 20 preferably coincide with the above-mentioned openings of the side panels 12 for connecting the header 8 to pipes 17.

Advantageously, pipes 17 laterally extend from the header chamber 19. Particularly, according to a possible embodiment, at least some of the pipes 17 extend from the side panels 12 of the header chamber, at which the pipes 17 inlet openings 20 are formed. In other words, at the side panels 12, the axes of the pipes 17 are transversally oriented to the side panels 12 themselves.

Gates 21 can be provided at the inlet openings 20, preferably they are adjustable and adapted to choke the flow rate of the fumes in pipes 17 (for example see Figure 5 and 6). Extensions 24 extending inside the sectors of the header chamber 9 can be possibly provided and they are connected to the pipes 17 at the inlet openings 20 thereof.

The side positioning of the pipes 17 with respect to the header chamber 9 enables to obtain different arrangements of the pipes system. Particularly, the pipes 17 can be arranged in order to reduce the flow resistances of the fume inside them.

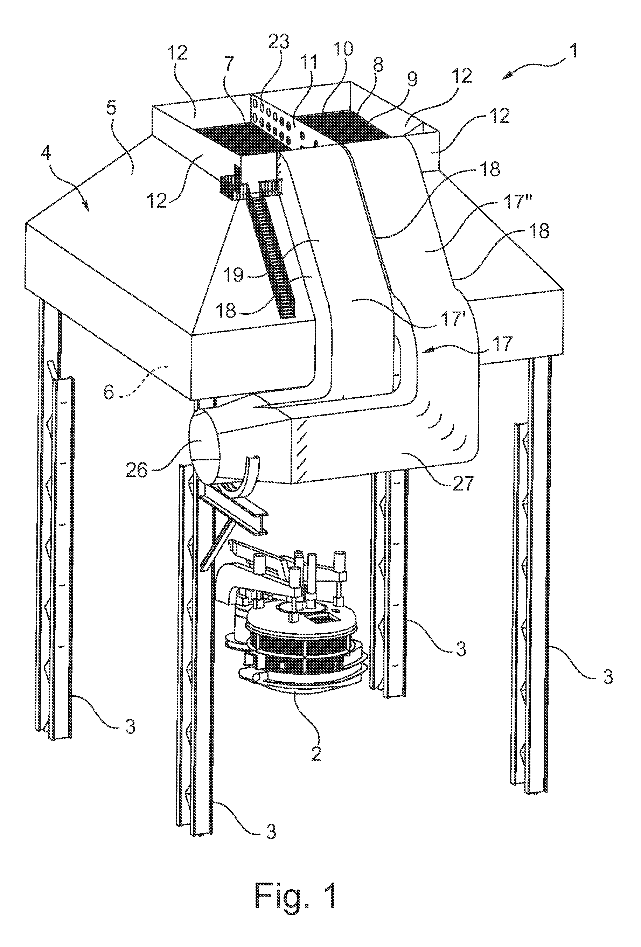

According to an embodiment, pipes 17 are associated to only one of these side panels 12 (Figures 1, 4). For example, it is possible to provide two juxtaposed pipes 17' and 17" extending from the same side panel 12. The axes of pipes 17, according to this arrangement, are preferably perpendicular to the side panel 12 from which they extend.

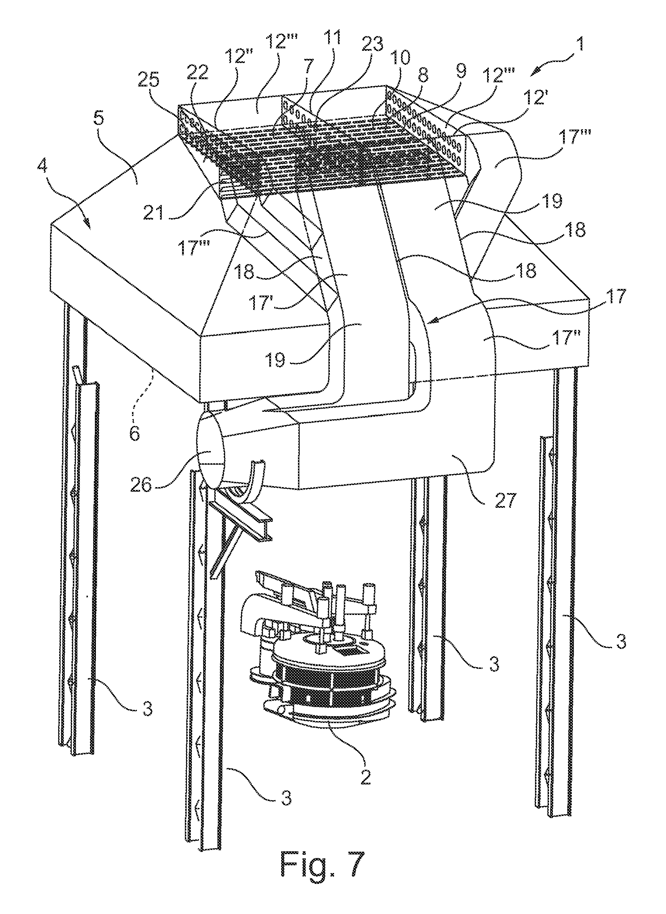

According to a further possible embodiment (Figure 7), the pipes 17 are associated to three of the side panels 12. For example, it is possible to provide, as in the preceding example, two juxtaposed pipes 17' and 17" extending from a first common side panel 12' and two further pipes 17"' and 17"" extending from a second 12" and third 12'" side panels respectively which are opposed one to the other. Preferably, pipes 17"' and 17"" extend in a direction tangential to panels 12" and 12'" (with the axes in correspondence of the inlet openings 20 perpendicular to the first panel 12') and they are fluidically connected to the latter by intermediate communication chambers 22. These chambers are partially delimited by the side panels 12 of the header chamber 9. Moreover, they can be closed by further panels or, alternatively, by the auxiliary cover 14. In order to enable the fume flow in the intermediate communication chambers 22, the side panels 12 can also comprise holes or slots 25. The inlet openings of pipes 17"' and 17"" can be also provided with gates 21. Pipes 17"' and 17"", according to a possible embodiment, are connected again to the pipes 17' and 17" in the converging segment of the main hood body 5, on which they are located externally to it.

According to an embodiment, the pipes 17 arranged in the described way partially extend outside the building by connecting to conventional pipes 26 (for example circular cross-section pipes) which supply the fumes to processing stations, for example, filters. Joining pipes 27 can be possibly provided between pipes 17 and conventional pipes 26, which can be also partially delimited by the main hood body 5 or by further walls of the building, or, alternatively, can be independent bodies connected to the latter.

From the above given description, the person skilled in the art will appreciate that the hood, according to the invention, the pipes, and the main hood body are integrated one to the other. In fact, portions of the main hood body act also as closing walls of the pipes. In this way, it is obtained a lightweight and compact structure which subjects the building to reduced static and dynamic loads.

Further, the integration of the pipes to the hood causes a cost reduction of the pipes, since these are obtainable, for example, by simply applying panels on the main hood body. Therefore, it is not necessary to provide conventional pipes and complex supporting structures for the latter.

Further, the pipes are moderately exposed to the winds (variant having an upper closure formed by panels), or are completely protected by them (variant having an auxiliary cover).

Moreover, since the pipes are integrated with hoods, they can take different arrangements, optimizing in this way the fluid dynamics of the fumes inside the pipes, in other words by reducing their flow resistances. This enables to reduce the electric energy necessary for supplying the possible fans thrusting the fumes.

Lastly, in the hood, according to the invention, the pipes have a reduced visual impact (variant having an upper closure formed by panels) or not at all (variant having an auxiliary cover).

To the described embodiments of the hood and building provided with such hood, the person skilled in the art, in order to satisfy existent contingent specifications, can make several additions, changes, or substitutions of elements with other operatively equivalent, without departing from the scope of the attached claims.

## Claims

1. Building suitable to house a metallurgical environment, comprising a hood (4) for drawing fumes produced in said metallurgical environment, said hood comprising:
- a main hood body (5) defining a hood conduit, said main hood body (5) having an arrangement of a converging conduit between an inlet (6) and an outlet openings (7) for the fumes coming from the metallurgical environment, wherein said outlet opening (7) lies over said inlet opening (6);
- a header (8) for collecting fumes coming from the outlet opening (7) of the main hood body (5) comprising a header chamber (9);
- one or more pipes (17) for conveying fumes outside said header (8),
wherein said main hood body (5) forms a covering of said building (1),
**characterised in that** one or more portions of said main hood body (5) forming said converging conduit form a wall of said one or more pipes (17), respectively, wherein said pipes (17) laterally extend from the header chamber (9).

2. Building (1) according to claim 1, wherein said portions of the main hood body (5) form common to said hood conduit and to said one or more pipes (17).

3. Building (1) according to claim 1, wherein said main hood body (5) comprises a two or more walled wall structure, wherein first walls of said two or more walls wall structure delimit said hood conduit, and wherein second walls of said two or more walls wall structure or portions thereof delimit said walls of the one or more pipes (17).

4. Building (1) according to anyone of the preceding claims, wherein said portions of the main hood body (5) form lower walls of said one or more pipes (17).

5. Building (1) according to anyone of the preceding claims, wherein said one or more pipes (17) are laterally delimited by a first and second side panels (18).

6. Building (1) according to anyone of the preceding claims, wherein said header chamber (9) is closed at the top by a closing panel (13).

7. Building (1) according to claim 5 or 6, wherein said one or more pipes (17) are delimited at the top by a closing upper panel (19) opposed to said main hood body (5) portions, said upper closing panel (19) being connected to said side panels (18) or being integrally made with them.

8. Building (1) according to claim 5 or 6, wherein said side panels (18) are shaped so that to close at the top said pipes (17).

9. Building (1) according to anyone of claims 1-5, comprising an auxiliary cover (14) overlapping the main hood body (4), delimiting with the latter a gap (15) in which said one or more pipes (17) are at least partially received.

10. Building (1) according to the preceding claim, wherein portions (16) of the auxiliary cover (14) opposed to said main hood body (5) portions form upper walls of said one or more pipes (17).

11. Building (1) according to claim 9 or 10, wherein said header chamber (9) is closed at the top by said auxiliary cover (14).

12. Building (1) according to anyone of the preceding claims, wherein the header chamber (9) has an outline following the outline of the outlet opening (7) of the main hood body (5).

13. Building (1) according to anyone of the preceding claims, wherein the header chamber (9) comprises an inlet opening which coincides with the outlet opening (7) of the main hood body (5) and one or more fixed or adjustable flow deflectors (10) adapted to convey the fumes from the main hood body (5) along desired paths.

14. Building (1) according to anyone of the preceding claims, wherein said header (8) comprises partitions (11) for partitioning the header chamber (9) in sectors.

15. Building (1) according to anyone of the preceding claims, wherein said pipes (17) internally comprise hooks adapted to at least partially hold fumes dusts.

## Patentansprüche

1. Gebäude, das zur Aufnahme einer metallurgischen Umgebung geeignet ist, umfassend eine Haube (4) zum Absaugen von Rauch, der in der metallurgischen Umgebung erzeugt wird, wobei die Haube Folgendes umfasst:
- einen Haupthaubenkörper (5), der eine Haubenleitung definiert, wobei der Haupthaubenkörper (5) eine Anordnung einer konvergierenden Leitung zwischen einer Einlass- (6) und einer Auslassöffnung (7) für den Rauch aufweist, der aus der metallurgischen Umgebung stammt, wobei die Auslassöffnung (7) über der Einlassöffnung (6) liegt;
- einen Kollektor (8) zum Auffangen des Rauchs aus der Auslassöffnung (7) des Haupthaubenkörpers (5), der eine Kollektorkammer (9) umfasst;
- ein oder mehrere Rohre (17) zum Leiten des Rauchs aus dem Kollektor (8) heraus, wobei der Haupthaubenkörper (5) eine Abdeckung des Gebäudes (1) bildet,
**dadurch gekennzeichnet, dass** ein oder mehrere Abschnitte des Haupthaubenkörpers (5), die die konvergierende Leitung bilden, jeweils eine Wand von dem oder den Rohren (17) bilden, wobei die Rohre (17) sich von der Kollektorkammer (9) aus seitlich erstrecken.

2. Gebäude (1) nach Anspruch 1, wobei Abschnitte des Haupthaubenkörpers (5) eine gemeinsame Leitung zur Haubenleitung und dem oder den Rohren (17) bilden.

3. Gebäude (1) nach Anspruch 1, wobei der Haupthaubenkörper (5) eine Wandstruktur mit zwei oder mehr Wänden umfasst, wobei die ersten Wände der Wandstruktur mit zwei oder mehr Wänden die Haubenleitung begrenzen, und wobei zweite Wände der Wandstruktur mit zwei oder mehr Wänden oder Abschnitte davon die Wände des oder der Rohre (17) begrenzen.

4. Gebäude (1) nach einem der vorangehenden Ansprüche, wobei die Abschnitte des Haupthaubenkörpers (5) untere Wände des oder der Rohre (17) bilden.

5. Gebäude (1) nach einem der vorangehenden Ansprüche, wobei das oder die Rohre (17) von einer ersten und zweiten Seitenplatte (18) seitlich begrenzt sind.

6. Gebäude (1) nach einem der vorangehenden Ansprüche, wobei die Kollektorkammer (9) an der Oberseite durch eine Schließplatte (13) verschlossen ist.

7. Gebäude (1) nach Anspruch 5 oder 6, wobei das oder die Rohre (17) an der Oberseite durch eine schließende obere Platte (19) gegenüber den Abschnitten des Haupthaubenkörpers (5) begrenzt sind, wobei die obere schließende Platte (19) mit den Seitenplatten (18) verbunden ist oder einstückig mit diesen hergestellt ist.

8. Gebäude (1) nach Anspruch 5 oder 6, wobei die Seitenplatten (18) derart geformt sind, dass sie sich an der Oberseite der Rohre (17) schließen.

9. Gebäude (1) nach einem der Ansprüche 1-5, umfassend eine Hilfsabdeckung (14), die den Haupthaubenkörper (4) überlagert und mit dem letzteren einen Spalt (15) begrenzt, in dem das oder die Rohre (17) wenigstens teilweise aufgenommen sind.

10. Gebäude (1) nach dem vorangehenden Anspruch, wobei Abschnitte (16) der Hilfsabdeckung (14) gegenüber den Abschnitten des Haupthaubenkörpers (5) obere Wände des oder der Rohre (17) bilden.

11. Gebäude (1) nach Anspruch 9 oder 10, wobei die Kollektorkammer (9) an der Oberseite durch die Hilfsabdeckung (14) verschlossen ist.

12. Gebäude (1) nach einem der vorangehenden Ansprüche, wobei die Kollektorkammer (9) einen Umriss aufweist, der dem Umriss der Auslassöffnung (7) des Haupthaubenkörpers (5) folgt.

13. Gebäude (1) nach einem der vorangehenden Ansprüche, wobei die Kollektorkammer (9) eine Einlassöffnung umfasst, die mit der Auslassöffnung (7) des Haupthaubenkörpers (5) übereinstimmt, und einen oder mehrere fest angeordnete oder einstellbare Ablenkbleche (10), die dazu ausgebildet sind, den Rauch vom Haupthaubenkörper (5) über gewünschte Wege zu leiten.

14. Gebäude (1) nach einem der vorangehenden Ansprüche, wobei der Kollektor (8) Trennwände (11) zum Einteilen der Kollektorkammer (9) in Bereiche umfasst.

15. Gebäude (1) nach einem der vorangehenden Ansprüche, wobei die Rohre (17) im Inneren Haken umfassen, die dazu ausgebildet sind, Rauchstäube wenigstens teilweise zurückzuhalten.

## Revendications

1. Bâtiment approprié pour héberger un environnement métallurgique, comprenant une hotte (4) destinée à aspirer les fumées produites dans ledit environnement métallurgique, ladite hotte comprenant :
- un corps principal de hotte (5) définissant un conduit de hotte, ledit corps principal de hotte (5) ayant un agencement d'un conduit convergeant entre une ouverture d'entrée (6) et une ouverture de sortie (7) pour les fumées provenant de l'environnement métallurgique, ladite ouverture de sortie (7) s'étendant au-dessus de ladite ouverture d'entrée (6) ;
- un collecteur (8) destiné à collecter les fumées provenant de l'ouverture de sortie (7) du corps principal de hotte (5), comprenant une chambre de collecteur (9) ;
- un ou plusieurs tuyaux (17) destinés à transporter les fumées à l'extérieur dudit collecteur (8),
ledit corps principal de hotte (5) formant une couverture dudit bâtiment (1),
**caractérisé par le fait qu'**une ou plusieurs parties dudit corps principal de hotte (5) formant ledit conduit convergeant forment respectivement une paroi dudit ou desdits tuyaux (17), lesdits tuyaux (17) s'étendant latéralement à partir de la chambre de collecteur (9).

2. Bâtiment (1) selon la revendication 1, dans lequel lesdites parties du corps principal de hotte (5) sont communes audit conduit de hotte et audit ou auxdits tuyaux (17).

3. Bâtiment (1) selon la revendication 1, dans lequel ledit corps principal de hotte (5) comprend une structure de paroi à deux parois ou plus, des premières parois de ladite structure de paroi à deux parois ou plus délimitant ledit conduit de hotte et des secondes parois de ladite structure de paroi à deux parois ou plus, ou des parties de celles-ci, délimitant lesdites parois du ou des tuyaux (17).

4. Bâtiment (1) selon l'une quelconque des revendications précédentes, dans lequel lesdites parties du corps principal de hotte (5) forment des parois inférieures dudit ou desdits tuyaux (17).

5. Bâtiment (1) selon l'une quelconque des revendications précédentes, dans lequel ledit ou lesdits tuyaux (17) sont délimités latéralement par des premier et second panneaux latéraux (18).

6. Bâtiment (1) selon l'une quelconque des revendications précédentes, dans lequel ladite chambre de collecteur (9) est fermée au sommet par un panneau de fermeture (13).

7. Bâtiment (1) selon l'une des revendications 5 ou 6, dans lequel ledit ou lesdits tuyaux (17) sont délimités au sommet par un panneau supérieur de fermeture (19) opposé auxdites parties du corps principal de hotte (5), ledit panneau supérieur de fermeture (19) étant relié auxdits panneaux latéraux (18) ou étant fait d'un seul tenant avec ceux-ci.

8. Bâtiment (1) selon l'une des revendications 5 ou 6, dans lequel lesdits panneaux latéraux (18) sont conformés de façon à fermer lesdits tuyaux (17) au sommet.

9. Bâtiment (1) selon l'une quelconque des revendications 1 à 5, comprenant un capot auxiliaire (14) chevauchant le corps principal de hotte (4), délimitant avec ce dernier un intervalle (15) dans lequel ledit ou lesdits tuyaux (17) sont au moins partiellement reçus.

10. Bâtiment (1) selon la revendication précédente, dans lequel des parties (16) du capot auxiliaire (14) opposées auxdites parties du corps principal de hotte (5) forment des parois supérieures dudit ou desdits tuyaux (17).

11. Bâtiment (1) selon l'une des revendications 9 ou 10, dans lequel ladite chambre de collecteur (9) est fermée au sommet par ledit capot auxiliaire (14).

12. Bâtiment (1) selon l'une quelconque des revendications précédentes, dans lequel la chambre de collecteur (9) a un profil suivant le profil de l'ouverture de sortie (7) du corps principal de hotte (5).

13. Bâtiment (1) selon l'une quelconque des revendications précédentes, dans lequel la chambre de collecteur (9) comprend une ouverture d'entrée qui coïncide avec l'ouverture de sortie (7) du corps principal de hotte (5) et un ou plusieurs déflecteurs d'écoulement fixes ou ajustables (10) aptes à transporter les fumées provenant du corps principal de hotte (5) le long de trajets souhaités.

14. Bâtiment (1) selon l'une quelconque des revendications précédentes, dans lequel ledit collecteur (8) comprend des cloisons (11) pour séparer la chambre de collecteur (9) en secteurs.

15. Bâtiment (1) selon l'une quelconque des revendications précédentes, dans lequel lesdits tuyaux (17) comprennent intérieurement des crochets aptes à retenir au moins partiellement des poussières de fumées.
